# EUROPÄISCHE PATENTSCHRIFT

(11) **EP 0 980 547 B1**
(45) Veröffentlichungstag und Bekanntmachung des Hinweises auf die Patenterteilung: **13.02.2002**
(21) Anmeldenummer: 98932032.0
(22) Anmeldetag: 29.04.1998
(51) Int. Cl.: G06F 11/00

(54) **VERFAHREN ZUM PRÜFEN EINES PROGRAMMS AUF FEHLER**
METHOD FOR CHECKING WHETHER A PROGRAMME CONTAINS ERRORS
PROCEDE POUR VERIFIER SI UN PROGRAMME COMPORTE DES ERREURS

(30) Priorität: 07.05.1997 DE 19719356
(43) Veröffentlichungstag der Anmeldung: 23.02.2000
(73) Patentinhaber: Fujitsu Siemens Computers GmbH, 81739 München (DE)
(72) Erfinder: PETERS, Stefan, D-85567 Grafing (DE)
(74) Vertreter: Epping, Wilhelm, Dipl.-Ing.
(86) Internationale Anmeldenummer: DE9801191
(87) Internationale Veröffentlichungsnummer: WO9851107

(56) Entgegenhaltungen:
- US-A- 5 613 098
- DAVID MOCKRIDGE: "SIM - An 8051 simulator" ELEKTOR ELECTRONICS., Bd. 20, Nr. 218, Januar 1994, Seiten 8-11, XP000430250 CANTERBURY GB
- JARL AALBU: "The importance of early simulation to the development of embedded systems" COMPUTER DESIGN., Bd. 33, Nr. 5, April 1994, Seiten 74-78, XP000447073 LITTLETON, MASSACHUSETTS US
- JIM CHANCE: "Simulation experiences in the development of software for digital signal processors" MICROPROCESSORS AND MICROSYSTEMS., Bd. 10, Nr. 8, Oktober 1986, Seiten 419-426, XP002081662 LONDON GB
- JOHN MOSELY: "Simulation on a Budget Avsim51" ELECTRONICS WORLD AND WIRELESS WORLD., Bd. 96, Nr. 1655, September 1990, Seiten 801-804, XP000151513 SURREY GB

## Beschreibung

Die Erfindung betrifft ein Verfahren zum Prüfen eines von einem Computer abzuarbeitenden Programms auf Fehler.

Um ein durch einen Computer abzuarbeitendes Programm auf Fehler zu prüfen, bedient sich ein Anwender in der Regel eines Prüfprogramms, das in dem Betriebssystem des Computers enthalten ist. In nahezu allen Betriebssystemen sind heutzutage solche Prüfprogramme vorgesehen.

Diese Prüfprogramme sind durch Prozessoren mit besonderen Hardwareeigenschaften abzuarbeiten, da solche Prozessoren Funktionen zum Steuern des Ablaufs der Prüfprogramme übernehmen können. Diese Funktionen werden im folgenden als Hardwarefunktionen bezeichnet. In einer besonderen Betriebsart, die auch Trace-Modus genannt wird, arbeitet ein solcher Prozessor das Programm schrittweise ab und löst nach jedem Programmbefehl des Programms eine Unterbrechung aus. Während dieser Unterbrechung kann eine Prüfoperation des Prüfprogramms durchgeführt werden. So können beispielsweise im Programm verwendete und in den Registern des Prozessors abgelegte Registerdaten nach jedem Programmbefehl aufgezeichnet werden und so ein Ablaufprotokoll des Programms erstellt werden.

Bei dem bekannten Verfahren zur Fehlerprüfung können nur die Prüfoperationen des Prüfprogramms ausgeführt werden, die durch die Hardwareeigenschaften des speziellen Prozessors unterstützt werden. Somit kann der Anwender in seinen Möglichkeiten, das Programm auf Fehler zu prüfen, deutlich eingeschränkt sein, falls der Prozessor nicht die zum Ablauf der Prüfoperationen des Prüfprogramms notwendigen Hardwareeigenschaften besitzt. Ferner sind Prüfprogramme, deren Lauffähigkeit von der konkreten physikalischen Ausgestaltung des Prozessors, d.h. von den Hardwareeigenschaften des Prozessors abhängen, nicht ohne weiteres auf einen Computer zu übertragen, dessen Prozessor die diesen Hardwareeigenschaften entsprechenden Hardwarefunktionen nicht übernimmt. Dies stellt insbesondere hinsichtlich der zunehmend wichtigen Übertragbarkeit von Betriebssystemen auf unterschiedliche Prozessor-Architekturen eine wesentliche Einschränkung dar.

Es ist ein Verfahren bekannt, bei dem ein Programm auf Fehler geprüft wird, ohne auf den Ablauf des Programms steuernde Hardwareeigenschaften eines konkreten Prozessors angewiesen zu sein. Bei diesem Verfahren werden zum schrittweisen Abarbeiten des zu prüfenden Programms die Programmbefehle im Arbeitsspeicher des Computers durch Befehle überschrieben, die Unterbrechungen des Programmablaufs erzeugen. Ein überschriebener Programmbefehl, der unter einer entsprechenden Befehlsadresse im Arbeitsspeicher stand, muß in einem Zwischenspeicher gesichert und zum Zeitpunkt seiner Ausführung wiederhergestellt werden. Ferner muß bei dem eben genannten Verfahren für den gleichberechtigten Zugriff auf den schnellen Datenzwischenspeicher, auch Daten-Cache genannt, und den schnellen Befehlszwischenspeicher, Befehls-Cache genannt, des Prozessors gesorgt werden, da die zu überschreibenden Programmbefehle zunächst im Datenzwischenspeicher gesichert und zum Ausführen des Programmbefehls in den Befehlszwischenspeicher eingelesen werden.

Weitere Nachteile ergeben sich beim Prüfen eines Programms, dessen ausführbarer Programmcode eine gemeinsame Basis für mehrere Anwenderprogramme darstellt (Shared-Code), d.h. dessen Programmcode zugleich mehrere Anwenderprogramme verwenden. Sollen für ein solches Programm Befehle erstellt werden, die Unterbrechungen des Programmablaufs erzeugen, so sind aufwendige Synchronisierungsmaßnahmen notwendig, um den Ablauf des Programms mittels eines Prüfprogramms verfolgen zu können.

Aufgabe der Erfindung ist es deshalb, ein Verfahren anzugeben, das die zum Ablauf eines vorgegebenen Prüfprogramms notwendigen Funktionen unabhängig von der konkreten Ausgestaltung eines Prozessors übernimmt und die Prüfung am Programm ermöglicht.

Die Erfindung löst diese Aufgabe durch das Verfahren mit den Merkmalen nach Anspruch 1.

Bei dem erfindungsgemäßen Prüfverfahren werden die Programmbefehle des Programms nicht direkt auf dem Prozessor zum

Ablauf gebracht, sondern durch das Schnittstellenprogramm schrittweise eingelesen und in den eben genannten Verfahrensschritten einzeln abgearbeitet. Zum Abarbeiten des zu prüfenden Programms werden die einzelnen Programmbefehle auf Maschinenbefehle zurückgeführt, die in dem Maschinenbefehlssatz des Prozessors enthalten sind. Dies ermöglicht ein schnelles Durchführen des Prüfverfahrens.

Das vorgestellte, durch das Schnittstellenprogramm realisierte Verfahren erlaubt es, nach jedem ausgeführten Programmbefehl zu prüfen, ob eine Prüfoperation des Prüfprogramms durchgeführt werden soll. Ist dies der Fall, so ruft das Schnittstellenprogramm das Betriebssystem auf, so daß alle in dem Prüfprogramm des Betriebssystems vorgesehenen Prüfoperationen durchgeführt werden können.

Das Schnittstellenprogramm simuliert in Kombination mit dem vorgegebenen Prozessor einen speziellen Prozessor, der in der Lage ist, die zum Betrieb des Prüfprogramms notwendigen Hardwarefunktionen zu übernehmen. Das zu prüfende Programm wird, gesteuert durch das Schnittstellenprogramm, so von dem vorgegebenen Prozessor abgearbeitet, als laufe es auf dem speziellen Prozessor ab, der diese Hardwarefunktionen übernimmt.

Das durch das Schnittstellenprogramm realisierte Verfahren ermöglicht es, ein bestimmtes Prüfprogramm auf ein beliebiges Computersystem mit einem beliebigen Prozessor zu übertragen. Der Anwender kann so mit dem ihm bekannten Prüfprogramm auf verschiedenen Computersystemen in gewohnter Weise arbeiten. So können Einarbeitungszeit und Umstellungskosten eingespart werden, die bei einem Umstieg auf ein neues Computersystem anfallen.

Ein weiterer Vorteil des Verfahrens besteht darin, daß der Programmcode des Programms nicht wie bei dem bekannten Verfahren zum Prüfen modifiziert werden muß. Die für eine Veränderung des Programmcodes notwendigen Maßnahmen werden somit überflüssig. Auch dies spart Zeit und Kosten und erhöht zudem die Zuverlässigkeit des Verfahrens.

Wie oben erläutert können sämtliche in dem Prüfprogramm vorgesehenen Prüfoperationen mit Hilfe dieses Verfahrens durchgeführt werden. Das Auslösen einer bestimmten Prüfoperation kann zudem vom Erfülltsein bestimmter Bedingungen abhängig gemacht werden. So ist es denkbar, beispielsweise nur Schreib- oder Lesezugriffe auf bestimmte Speicherbereiche zu protokollieren oder dem Anwender den ausgeführten Programmbefehl nur zu melden, wenn dieser einem vorgegebenen Befehlstyp zuzuordnen ist.

Vorteilhaft wird in dem erfindungsgemäßen Verfahren geprüft, ob der auszuführende Programmbefehl ein Sprungbefehl ist. Falls dies zutrifft, wird eine durch den Sprungbefehl gegebene Sprungadresse als einzulesende Befehlsadresse eingestellt. Gesteuert durch das Schnittstellenprogramm wird dann über die Sprungadresse der nächste auszuführende Programmbefehl eingelesen, worauf die weiteren, zum Abarbeiten dieses Programmbefehls notwendigen Verfahrensschritte durchgeführt werden.

Weiterhin wird bei dem Verfahren geprüft, ob der auszuführende Programmbefehl ein den Ablauf des Programms unterbrechender Befehl ist. Falls der auszuführende Programmbefehl ein solcher Befehl ist, wird das Betriebssystem aufgerufen. Dieses kann im Anschluß an die Unterbrechung eine entsprechende Unterbrechungsoperation, z.B. den Aufruf eines anderen Programms veranlassen. Nach Abarbeiten der Unterbrechungsoperation wird hierauf das Prüfverfahren fortgesetzt, d.h. das zu prüfende Programm unter der Kontrolle des Schnittstellenprogramms weiter schrittweise abgearbeitet.

Eine vorteilhafte Weiterbildung des Verfahrens besteht darin, in dem Programm verwendete Registerdaten und die Befehlsadresse des auszuführenden Programmbefehls durch das Betriebssystem in einem Kontrollspeicher zu sichern, bevor das Schnittstellenprogramm durch das Betriebssystem aufgerufen wird. Der Kontrollspeicher dient dem Datenaustausch zwischen dem Schnittstellenprogramm und dem Betriebssystem. So werden zu Beginn des Programmablaufs die in dem Programm verwendeten Registerdaten und die Befehlsadresse des ersten auszuführenden Programmbefehls aus dem Kontrollspeicher eingelesen und dem Schnittstellenprogramm zum Weiterverarbeiten zur Verfügung gestellt. Ebenso können die zum Fortsetzen des Prüfverfahrens benötigten Registerdaten und die aktuelle Befehlsadresse aus dem Kontrollspeicher geladen werden, nachdem der Ablauf des Programms durch einen Programmbefehl unterbrochen worden ist.

Vorteilhaft werden die Registerdaten in Kontrollregistern des Kontrollspeichers und die Befehlsadresse des auszuführenden Programmbefehls in einem Befehlsregister des Kontrollspeichers gesichert.

Die in dem auszuführenden Programmbefehl als Eingabedaten verwendeten Registerdaten können auf dem Maschinenbefehl als Standardeingaberegister dienende Register des Prozessors übertragen werden. Außerdem können die Registerdaten gesichert werden, die durch Ausführen des Maschinenbefehls erzeugt und als Ausgabedaten in dem Maschinenbefehl als Standardausgaberegister dienenden Registern des Prozessors abgelegt sind. Die Eingabedaten werden also aus den Kontrollregistern des Kontrollspeichers in die Register des Prozessors geladen, auf die der dem auszuführenden Programmbefehl in seiner Funktion entsprechende Maschinenbefehl des Prozessors zugreift. Nach Ausführen des Maschinenbefehls werden die in den Registern des Prozessors als Ausgabedaten abgelegten Registerdaten wiederum in den Kontrollregistern des Kontrollspeichers gesichert.

Vorteilhaft werden zum Ausführen des Prüfprogramms notwendige Prüfdaten in dem Kontrollspeicher gespeichert. Dies können beispielsweise Befehlsadressen von Programmbefehlen sein, die eine Prüfoperation des Prüfprogramms auslösen. Ferner können in den Kontrollspeicher beispielsweise Speicheradressen eingetragen werden, die einen Speicherbereich festlegen, der auf Schreib- oder Lesezugriffe überwacht werden soll.

Eine weitere vorteilhafte Weiterbildung des Verfahrens besteht darin, daß ausgeführte Programmbefehle selbsttätig aufgezeichnet werden, ohne dies dem Anwender explizit anzuzeigen. Ist der Anwender lediglich an einem solchen Ablaufprotokoll des Programms interessiert, so erlaubt es die eben genannte Maßnahme, das Prüfverfahren möglichst schnell durchzuführen.

Die Erfindung wird im folgenden an Hand der Figuren näher erläutert. Darin zeigen:
- Fig. 1: ein Blockdiagramm mit wichtigen Komponenten, die zum Prüfen eines Anwenderprogramms auf Fehler benötigt werden,
- Fig. 2: ein Flußdiagramm des Verfahrens, erläutert am Beispiel der Überwachung von Speicherbereichen auf Schreibzugriffe, und
- Fig. 3: ein Blockdiagramm zur Erläuterung, wie ein Programmbefehl des Anwenderprogramms mittels eines Maschinenbefehls eines Prozessors abgearbeitet wird.

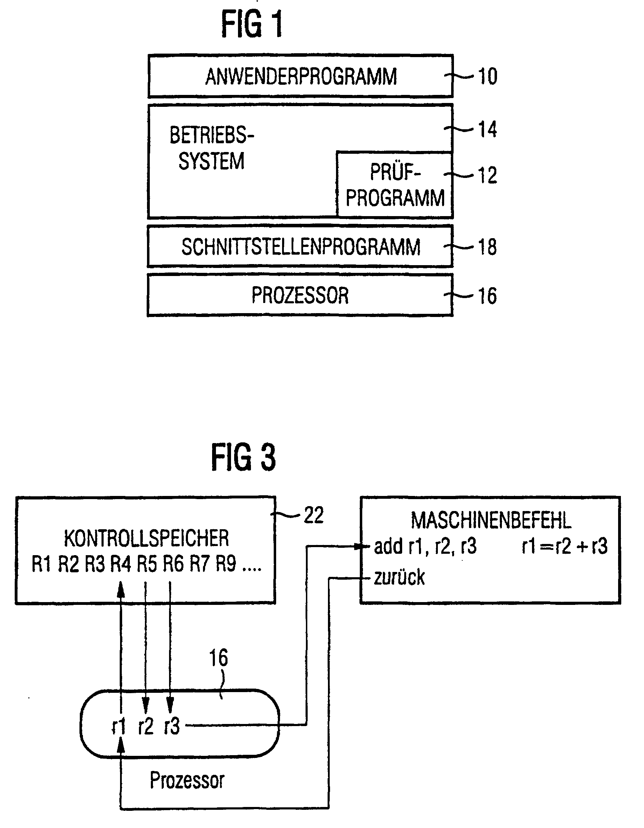

In Fig. 1 sind die wichtigen Komponenten dargestellt, mit denen ein Programm, beispielsweise ein Anwenderprogramm 10, unter Einbeziehung eines Prüfprogrammes 12 auf Fehler geprüft werden kann. Zum Betrieb eines Computers, auf dem das Anwenderprogramm 10 abzuarbeiten ist, ist ein Betriebssystem 14 erforderlich, daß die Ausführung des Anwenderprogramms 10 steuert und überwacht. In dem Betriebssystem 14 ist das Prüfprogramm 12 enthalten, mit dem das Anwenderprogramm 10 auf Fehler überprüft werden kann. Das Prüfprogramm 12 gibt dem Anwender die Möglichkeit, über eine Reihe von Prüfoperationen Fehler in dem Anwenderprogramm 10 zu erkennen und diese zu beseitigen.

Im folgenden wird davon ausgegangen, daß der Computer einen Prozessor 16 enthält, der die zur Unterstützung des Prüfprogramms 12 notwendigen Hardwareeigenschaften nicht hat. In dem vorliegenden Verfahren werden die den Ablauf des Prüfprogramms steuernden Funktionen von einem Schnittstellenprogramm 18 übernommen, das es erlaubt, das Anwenderprogramm 10 nach Ausführen eines einzelnen Programmbefehls anzuhalten und gegebenenfalls eine Prüfoperation des Prüfprogramms 12 auszuführen.

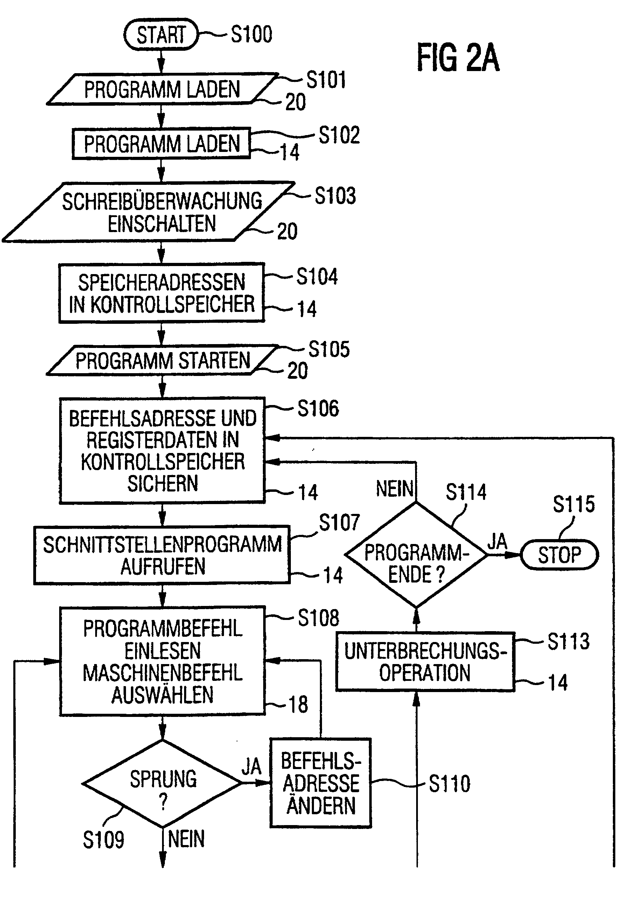

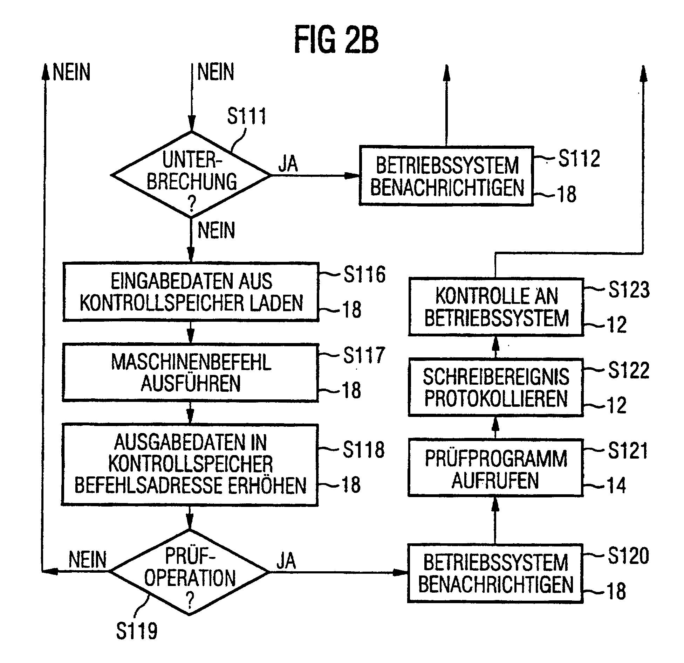

In Fig. 2 ist ein Flußdiagramm dargestellt, das das Verfahren am Beispiel der Überwachung von Speicherbereichen auf Schreibzugriffe erläutert. Dem Anwender 20 soll also beim Prüfen des Anwenderprogramms 10 ein Zugriff auf einen von ihm ausgewählten Speicherbereich angezeigt werden.

Das Verfahren beginnt mit Schritt S100. In Schritt S101 gibt der Anwender 20 die Anweisung, das Anwenderprogramm 10 zu laden. In Schritt S102 veranlaßt hierauf das Betriebssystem 14 das Laden des Anwenderprogramms 10 in einen Arbeitsspeicher des Computers. Der Anwender 20 wird dann aufgefordert, die von ihm gewünschte Prüfoperation anzugeben.

In Schritt S103 schaltet der Anwender 20 in diesem Ausführungsbeispiel die Schreibüberwachung ein, die es ihm ermöglicht, einen Schreibzugriff des Anwenderprogramms 10 auf einen von ihm angegebenen Speicherbereich zu erfassen. Um den zu überwachenden Speicherbereich festzulegen, gibt der Anwender 20 in diesem Schritt eine untere und eine obere Speicheradresse an. Durch diese beiden Angaben ist der zu überwachende, zusammenhängende Speicherbereich festgelegt. In Schritt S104 schreibt das Betriebssystem 14 die beiden Speicheradressen in einen Kontrollspeicher 22 (siehe Fig. 3), den es zum Datenaustausch mit dem Schnittstellenprogramm 18 beispielsweise innerhalb des Arbeitsspeichers angelegt hat.

In Schritt S105 gibt nun der Anwender 20 den Befehl zum Starten des Anwenderprogramms 10. Dieser Schritt ist wegen der gewünschten Schreibüberwachung nötig. Zum Abarbeiten des Anwenderprogramms 10 ohne Verwendung des Prüfprogramms 12 wäre der Schritt S105 überflüssig. Das Anwenderprogramm 10 würde in diesem Fall sofort mit Schritt S102 gestartet, in dem das Betriebssystem 14 das Anwenderprogramm 10 in den Arbeitsspeicher lädt.

In Schritt S106 sichert nun das Betriebssystem 14 die Befehlsadresse des ersten auszuführenden Programmbefehls des Anwenderprogramms 10, die angibt, unter welcher Adresse der auszuführende Programmbefehl im Arbeitsspeicher des Computers zu finden ist. Dazu wird die Befehlsadresse in ein Befehlsregister des Kontrollspeichers 22 geschrieben. Ebenso werden Registerdaten, die das Anwenderprogramm 10 Registern des Prozessors 16 zuordnet, in Kontrollregistern des Kontrollspeichers gesichert. Die Kontrollregister des Kontrollspeichers sind somit als ein Abbild der Register des Prozessors 16 anzusehen. Die den Registern des Prozessors 16 zugeordneten Registerdaten werden also nicht diesen Registern selbst, sondern den Kontrollregistern des Kontrollspeichers 22 zugeführt. Entsprechend ist das in dem Kontrollspeicher 22 angelegte Befehlsregister ein Abbild eines entsprechenden Registers des Prozessors 16. Auch die Befehlsadresse des gerade auszuführenden Programmbefehls wird somit nicht dem entsprechenden Register des Prozessors 16, sondern dem Befehlsregister des Kontrollspeichers 22 zugeführt.

In Schritt S107 ruft das Betriebssystem 14 das Schnittstellenprogramm 18 auf, das zum schrittweisen Abarbeiten des Anwenderprogramms 10 unter Verwendung der in dem Kontrollspeicher 22 angeordneten Kontrollregister und des Befehlsregisters verwendet wird. Das Betriebssystem 14 übergibt dem Schnittstellenprogramm 18 einen oder mehrere Parameter, die es diesem erlauben, den Kontrollspeicher 22 innerhalb des Hauptspeichers zu lokalisieren. Die Parameter können beispielsweise eine Anfangsadresse und eine Endadresse des Kontrollspeichers 22 innerhalb des Hauptspeichers sein.

In Schritt S108 wird unter der Kontrolle des Schnittstellenprogramms 18 die Befehlsadresse aus dem Befehlsregister des Kontrollspeichers 22 und über diese Befehlsadresse der entsprechende Programmbefehl aus dem Arbeitsspeicher eingelesen, um einen dem eingelesenen Programmbefehl in seiner Funktion entsprechenden Maschinenbefehl des Prozessors 16 auszuwählen.

Im folgenden sind drei Arten von Programmbefehlen zu unterscheiden. Unter einem Sprungbefehl wird ein Programmbefehl verstanden, der auf eine Befehlsadresse eines nächsten auszuführenden Programmbefehls verweist. Als Unterbrechungsbefehl wird ein Programmbefehl bezeichnet, der den Ablauf des Anwenderprogramms 10 anhält und das Betriebssystem 14 benachrichtigt, das daraufhin eine Unterbrechungsoperation ausführt. Eine solche Unterbrechung wird z.B. ausgelöst, um von dem Betriebssystem 14 eine Systemroutine, beispielsweise zur Ausgabe eines Zeichens auf einem Bildschirm, abarbeiten zu lassen. Der dritten Gruppe von Programmbefehlen gehören alle anderen Programmbefehle an, die im folgenden gemeint sind, wenn nicht ausdrücklich erwähnt ist, daß der auszuführende Programmbefehl ein Sprungbefehl oder ein Unterbrechungsbefehl ist. Gehört der eingelesene Programmbefehl zu dieser Gruppe von Programmbefehlen, so wird der ihm in seiner Funktion entsprechende Maschinenbefehl des Prozessors 16 ausgewählt.

In Schritt S109 wird geprüft, ob der auszuführende Programmbefehl ein Sprungbefehl ist. Ist dies der Fall, so wird in Schritt S110 unter der Kontrolle des Schnittstellenprogramms 18 die Befehlsadresse gemäß dem eingelesenen Sprungbefehl verändert und daraufhin mit Schritt S108 fortgesetzt, d.h. der neue Programmbefehl an Hand seiner Befehlsadresse eingelesen. Ist der auszuführende Programmbefehl in Schritt S109 kein Sprungbefehl, so wird in Schritt S111 geprüft, ob er ein Unterbrechungsbefehl ist. Ist dies der Fall, so wird in Schritt S112 dies dem Betriebssystem 14 von dem Schnittstellenprogramm 18 mitgeteilt. Das Betriebssystem 14 führt hierauf in Schritt S113 eine entsprechende Unterbrechungsoperation, z.B. eine Systemroutine aus. Wird in Schritt S114 festgestellt, daß das Anwenderprogramm 10 vollständig abgearbeitet ist, so ist in Schritt S115 das Verfahren beendet.

Wird in Schritt S114 jedoch festgestellt, daß noch weitere Programmbefehl abzuarbeiten sind, so wird mit Schritt S106 fortgefahren. Nachdem die Kontrolle von dem Schnittstellenprogramm 18 auf das Betriebssystem 14 übergegangen ist, müssen in Schritt S106 die Kontrollregister und das Befehlsregister durch das Betriebssystem 14 wiederhergestellt werden. Es werden also die in dem Anwenderprogramm 10 verwendeten Registerdaten auf die Kontrollregister und die Befehlsadresse des nächsten auszuführenden Programmbefehls auf das Befehlsregister des Kontrollspeichers 22 übertragen. Daraufhin wird wie oben beschrieben mit Schritt S107 fortgefahren.

Ist der eingelesene Programmbefehl in Schritt S111 dagegen kein Unterbrechungsbefehl, so wird in den Schritten S116 bis S118 der Programmbefehl des Anwenderprogramms 10 abgearbeitet, indem der dem Programmbefehl entsprechende Maschinenbefehl ausgeführt wird. Das Abarbeiten des Programmbefehls in den Schritten S116 bis S118 wird später an Hand der Fig. 3 erläutert.

In Schritt S116 werden die in dem Programmbefehl als Eingabedaten verwendeten Registerdaten aus den. Kontrollregistern 22 des Kontrollspeichers auf Prozessorregister übertragen, die dem Maschinenbefehl als Standardeingaberegister dienen.

Schritt S116 wird selbstverständlich nur dann ausgeführt, wenn der Programmbefehl Eingabedaten verwendet.

In Schritt S117 wird hierauf unter der Kontrolle des Schnittstellenprogramms 18 der dem auszuführenden Programmbefehl entsprechende Maschinenbefehl ausgeführt. Werden dabei Registerdaten als Ausgabedaten in Prozessorregistern abgelegt, die dem Prozessor 16 als Standardausgaberegister dienen, so werden in Schritt S118 diese Ausgabedaten in Kontrollregistern des Kontrollspeichers 22 gesichert, die in dem auszuführenden Programmbefehl des Anwenderprogramms 10 den Ausgabedaten zugeordnet sind. Auch dieser Schritt wird selbstverständlich nur ausgeführt, wenn in dem Programmbefehl bzw. in dem Maschinenbefehl Ausgabedaten erzeugt werden. Ferner wird in Schritt S118 die Befehlsadresse entsprechend dem nächsten auszuführenden Programmbefehl erhöht.

In Schritt S119 wird geprüft, ob beim Abarbeiten des Programmbefehls ein Schreibzugriff auf den Speicherbereich stattgefunden hat, der von dem Anwender 20 in Schritt S103 angegeben worden ist und somit der Schreibüberwachung unterliegt. Ist auf diesen Speicherbereich nicht zugegriffen worden, so wird das Verfahren mit Schritt S108 fortgesetzt, indem der nächste auszuführende Programmbefehl über seine Befehlsadresse eingelesen wird und mit den Schritten S109 bis S118 wie oben beschrieben fortgesetzt wird. Wird in Schritt S119 festgestellt, daß beim Abarbeiten des Programmbefehls auf den zu überwachenden Speicherbereich zugegriffen worden ist, so übergibt das Schnittstellenprogramm 18 in Schritt S120 die Kontrolle an das Betriebssystem 14. In Schritt S121 wird daraufhin das in dem Betriebssystem 14 enthaltene Prüfprogramm 12 aufgerufen, das in Schritt S122 die entsprechende Prüfoperation ausführt, d.h. in diesem Ausführungsbeispiel den Schreibzugriff auf den von dem Anwender 20 angegebenen Speicherbereich protokolliert.

In Schritt S123 übergibt das Prüfprogramm 12 daraufhin die Kontrolle wiederum an das Betriebssystem 14, worauf das Verfahren mit Schritt S106 fortgesetzt wird. In Schritt S106 sorgt das Betriebssystem 14 dafür, daß die Registerdaten und die Befehlsadresse des nächsten auszuführenden Programmbefehls in die Kontrollregister bzw. das Befehlsregister des Kontrollspeichers eingetragen werden. Die Wiederherstellung der Kontrollregister und des Befehlsregisters des Kontrollspeichers 22 ist nötig geworden, da beim Abarbeiten des Anwenderprogramms die. Kontrolle zwischenzeitlich an das Betriebssystem (14) übergeben worden ist. Die dem Schritt S106 nachfolgenden Schritte werden nun so lange wiederholt, bis das Anwenderprogramm vollständig abgearbeitet ist.

In Fig. 3 ist erläutert, wie ein auszuführender Programmbefehl bei dem vorliegenden Verfahren abgearbeitet wird. In dem Kontrollspeicher 22 sind die von dem Anwenderprogramm verwendeten Kontrollregister R1 bis R9 dargestellt. Sollen beispielsweise gemäß dem auszuführenden Programmbefehl die in den Kontrollregistern R6 und R7 gespeicherten Registerdaten addiert und das Ergebnis dieser Addition in das Kontrollregister R5 geschrieben werden, so sind zunächst die Registerdaten der Kontrollregister R6, R7 auf die als Standardeingaberegister des Prozessors dienenden Prozessorregister r2 und r3 zu übertragen. Dieser Vorgang ist in Fig. 2 mit Schritt S116 bezeichnet. Nun wird von dem Prozessor 16 der dem auszuführenden Programmbefehl funktionsgleiche Maschinenbefehl "add r1,r2,r3" ausgeführt, der die in den Prozessorregistern r2,r3 als Eingabedaten gespeicherten Registerdaten addiert und das Ergebnis in das Standardausgaberegister r1 des Prozessors 16 schreibt. In Fig. 2 ist dieser Schritt mit S117 bezeichnet. Nach Ausführen des Maschinenbefehls "add r1,r2,r3" wird ein Rücksprungbefehl "zurück" ausgeführt und das in dem Standardausgaberegister r1 des Prozessors abgelegte Ergebnis auf das Kontrollregister R5 des Kontrollspeichers 22 übertragen. Nach Durchführen dieses, in Fig. 2 mit S118 bezeichneten Schrittes, ist der Programmbefehl des Anwenderprogramms 10 vollständig abgearbeitet.

## Patentansprüche

1. Verfahren zur Steuerung des Ablaufs von Prüfprogrammen (12) auf einem Computer unabhängig vom eigentlichen Funktionsumfang der Prozessorhardware durch Verwendung eines gesonderten Schnittstellenprogramms (18), das auf den jeweiligen Prozessor (16) ausgerichtete Ablaufroutinen aufweist und das vom Betriebssystem (14) des Prozessors aufgerufen wird, wenn eine vom Prüfprogramm (12) auszuführende Funktion vom Prozessor nicht direkt ausgeführt werden kann, wobei zum Prüfen eines vom Computer abzuarbeitenden Programms (10) die folgenden Verfahrensschritte durchgeführt werden:
- Übergabe einer den auszuführenden Programmbefehl adressierenden Befehlsadresse an das Schnittstellenprogramm (18),
- Einlesen des durch die Befehlsadresse adressierten, auszuführenden Programmbefehls durch das Schnittstellenprogramm (18),
- Auswählen eines dem auszuführenden Programmbefehl in seiner Funktion entsprechenden Maschinenbefehls (add r1,r2,r3) des Prozessors (16),
- Ausführen des dem auszuführenden Programmbefehl entsprechenden Maschinenbefehls (add r1,r2,r3),
- Einstellen der Befehlsadresse eines nächsten auszuführenden Programmbefehls,
- Prüfen, ob aufgrund des ausgeführten Programmbefehls entsprechend der Vorgabe des Anwenders eine Prüfoperation auszulösen ist,
- Aufrufen des Betriebssystems (14) und Auslösen der Prüfoperation, falls aufgrund des ausgeführten Programmbefehls eine Prüfoperation auszulösen ist, andernfalls Einlesen des nächsten auszuführenden Programmbefehls.

2. Verfahren nach Anspruch 1, **dadurch gekennzeichnet, daß** geprüft wird, ob der auszuführende Programmbefehl ein Sprungbefehl ist, und daß eine durch den Sprungbefehl gegebene Sprungadresse als einzulesende Befehlsadresse eingestellt wird, falls der ausgeführte Befehl ein solcher Befehl ist.

3. Verfahren nach Anspruch 1 oder 2, **dadurch gekennzeichnet, daß** geprüft wird, ob der auszuführende Programmbefehl ein den Ablauf des Programms (10) unterbrechender Befehl ist, und daß das Betriebssystem (14) aufgerufen wird, falls der auszuführende Programmbefehl ein solcher Befehl ist.

4. Verfahren nach einem der vorhergehenden Ansprüche, **dadurch gekennzeichnet, daß** in dem Programm (10) verwendete Registerdaten und die Befehlsadresse des auszuführenden Programmbefehls durch das Betriebssystem (14) in einem Kontrollspeicher (22) gesichert werden, bevor das Schnittstellenprogramm (18) durch das Betriebssystem (14) aufgerufen wird.

5. Verfahren nach Anspruch 4, **dadurch gekennzeichnet, daß** die Registerdaten in Kontrollregistern (R1-R9) des Kontrollspeichers (22) und die Befehlsadresse des auszuführenden Programmbefehls in einem Befehlsregister des Kontrollspeichers (22) gesichert werden.

6. Verfahren nach Anspruch 5, **dadurch gekennzeichnet, daß** die in dem auszuführenden Programmbefehl als Eingabedaten verwendeten Registerdaten auf dem Maschinenbefehl (add r1,r2,r3) als Standardeingaberegister dienende Register (r2,r3) des Prozessors (16) übertragen werden und daß die Registerdaten gesichert werden, die durch Ausführen des Maschinenbefehls (add r1,r2,r3) erzeugt und als Ausgabedaten in dem Maschinenbefehl als Standardausgaberegister (r1) dienenden Registern des Prozessors abgelegt sind.

7. Verfahren nach einem der Ansprüche 4 bis 6, **dadurch gekennzeichnet, daß** zum Ausführen des Prüfprogramms (12) notwendige Prüfdaten in dem Kontrollspeicher (22) gespeichert werden.

8. Verfahren nach einem der vorhergehenden Ansprüche, **dadurch gekennzeichnet, daß** ausgeführte Programmbefehle aufgezeichnet werden, ohne eine Prüfoperation des Prüfprogramms (12) auszuführen.

## Claims

1. Method for controlling the execution of checking programs (12) on a computer irrespective of the actual functional scope of the processor hardware by using a separate interface program (18) which has execution routines oriented towards the respective processor (16) and is invoked by the operating system (14) of the processor if a function to be performed by the checking program (12) cannot be executed directly by the processor, where the following method steps are carried out in order to check a program (10) which is to be executed by the computer:
- an instruction address addressing the program instruction to be executed is transferred to the interface program (18),
- the program instruction to be executed which is addressed by the instruction address is read in by the interface program (18),
- a machine instruction (add r1, r2, r3) of the processor (16) whose function corresponds to that of the program instruction to be executed is selected,
- the machine instruction (add r1, r2, r3) corresponding to the program instruction to be executed is executed,
- the instruction address of a next program instruction to be executed is set,
- a check is carried out to determine whether, on the basis of the program instruction executed, a checking operation needs to be initiated as prescribed by the user,
- the operating system (14) is invoked and the checking operation is initiated if the program instruction executed means that a checking operation needs to be initiated, otherwise the next program instruction to be executed is read in.

2. Method according to Claim 1, **characterized in that** a check is carried out to determine whether the program instruction to be executed is a jump instruction, and **in that** a jump address provided by the jump instruction is set as the instruction address to be read in if the instruction executed is such an instruction.

3. Method according to Claim 1 or 2, **characterized in that** a check is carried out to determine whether the program instruction to be executed is an instruction which interrupts execution of the program (10), and **in that** the operating system (14) is invoked if the program instruction to be executed is such an instruction.

4. Method according to one of the preceding claims, **characterized in that** register data used in the program (10) and the instruction address of the program instruction to be executed are saved by the operating system (14) in a control memory (22) before the interface program (18) is invoked by the operating system (14).

5. Method according to Claim 4, **characterized in that** the register data are saved in control registers (R1-R9) of the control memory (22), and the instruction address of the program instruction to be executed is saved in an instruction register of the control memory (22).

6. Method according to Claim 5, **characterized in that** the register data used as input data in the program instruction to be executed are transferred to registers (r2, r3) of the processor (16) which serve as standard input registers for the machine instruction (add r1, r2, r3), and **in that** the register data which are produced by execution of the machine instruction (add r1, r2, r3) and are stored as output data in registers of the processor which serve as standard output registers (r1) for the machine instruction are saved.

7. Method according to one of Claims 4 to 6, **characterized in that** checking data required for executing the checking program (12) are stored in the control memory (22).

8. Method according to one of the preceding claims, **characterized in that** executed program instructions are recorded without executing a checking operation of the checking program (12).

## Revendications

1. Procédé pour commander le déroulement de programmes (12) de test sur un ordinateur, indépendamment de l'ensemble des fonctions proprement dites des matériels de processeur, par utilisation d'un programme (18) d'interface distinct qui comporte des routines de déroulement orientées sur le processeur (16) associé et qui est appelé par le système (14) d'exploitation du processeur si une fonction à exécuter par le programme (12) de test ne peut pas être exécutée directement par le processeur, les étapes opératoires suivantes étant effectuées pour tester un programme (10) à traiter par l'ordinateur :
- transmission au programme (18) d'interface d'une adresse d'instruction adressant l'instruction de programme à exécuter,
- entrée par le programme (18) d'interface de l'instruction de programme à exécuter par l'adresse d'instruction,
- sélection d'une instruction (add r1, r2, r3) de machine, correspondant dans sa fonction à l'instruction de programme à exécuter, du processeur (16),
- exécution de l'instruction (add r1, r2, r3) de machine correspondant à l'instruction de programme à exécuter,
- réglage de l'adresse d'instruction d'une instruction de programme suivante à exécuter,
- vérification pour savoir si une opération de test est à déclencher sur la base de l'instruction de programme exécutée, en fonction de la prescription de l'utilisateur,
- appel du système (14) d'exploitation et déclenchement de l'opération de test dans le cas où une opération de test est à déclencher sur la base de l'instruction de programme exécutée, sinon entrée de l'instruction de programme suivante à exécuter.

2. Procédé suivant la revendication 1, **caractérisé en ce qu'**il est vérifié si l'instruction de programme à exécuter est une instruction de saut et **en ce qu'**une adresse de saut donnée par l'instruction de saut est réglée comme adresse d'instruction à entrer dans le cas où l'instruction exécutée est une instruction de ce genre.

3. Procédé suivant la revendication 1 ou 2, **caractérisé en ce qu'**il est vérifié si l'instruction de programme à exécuter et une instruction interrompant le déroulement du programme (10) et **en ce que** le système (14) d'exploitation est appelé dans le cas où l'instruction de programme à exécuter est une instruction de ce genre.

4. Procédé suivant l'une des revendications précédentes, **caractérisé en ce qu'**il est mis en sécurité par le système (14) d'exploitation dans une mémoire (22) de contrôle des données de registre utilisées dans le programme (10) et l'adresse de l'instruction de programme à exécuter avant que le programme (18) d'interface ne soit appelé par le système (14) d'exploitation.

5. Procédé suivant la revendication 4, **caractérisé en ce que** les données de registre sont mises en sécurité dans des registres (R1 à R9) de contrôle de la mémoire (22) de contrôle et **en ce que** l'adresse de l'instruction de programme à exécuter est mise en sécurité dans un registre d'instruction de la mémoire (22) de contrôle.

6. Procédé suivant la revendication 5, **caractérisé en ce que** les données de registre utilisées dans l'instruction de programme à exécuter comme données d'entrée sont transmises à des registres (r1, r3) du processeur (16) servant de registre d'entrée normalisé sur l'instruction (add r1, r2, r3) de machine et **en ce que** les données de registre qui sont produites par exécution de l'instruction (add r1, r2, r3) de machine et qui sont mises en mémoire comme données de sortie dans des registres du processeur servant de registre (r1) de sortie normalisée dans l'instruction de machine sont mises en sécurité.

7. Procédé suivant l'une des revendications 4 à 6, **caractérisé en ce que** des données de test nécessaires à l'exécution du programme (12) de test sont mises en mémoire dans la mémoire (22) de contrôle.

8. Procédé suivant l'une des revendications précédentes, **caractérisé en ce que** des instructions de programme exécutées sont enregistrées sans exécuter une opération de test du programme (12) de test.
